# EUROPEAN PATENT APPLICATION

(11) **EP 4 738 941 A1**
(43) Date of publication of application: **06.05.2026**
(21) Application number: 24852407.6
(22) Date of filing: 09.08.2024
(51) Int. Cl.: H04W 52/02, H04W 76/27, H04W 76/15, H04W 74/0816, H04W 84/12

(54) **POWER SAVING COMMUNICATION METHOD AND DEVICE USING MULTIPLE LINKS IN WIRELESS LAN SYSTEM**

(30) Priority: 10.08.2023 KR 20230105082; 11.09.2023 KR 20230120711
(71) Applicant: Hyundai Motor Company, Seoul 06797 (KR); Kia Corporation, Seoul 06797 (KR); Korea National University of Transportation Industry-Academic Cooperation Foundation, Chungju-si, Chungcheongbuk-do 27469 (KR)
(72) Inventor: KIM, Yong Ho, Incheon 22003 (KR); MOON, Ju Seong, Osan-si Gyeonggi-do 18101 (KR)
(74) Representative: Isarpatent
(86) International application number: PCT/KR2024/011896
(87) International publication number: WO 2025/034054

(57) **Abstract**

The present disclosure relates to performing communication using multiple links in a WLAN system, and a method that is performed by an AP includes receiving a frame including information for transitioning a power saving link into a communication-capable state by using an active link, transmitting a response frame by using the active link, transitioning the power saving link into the communication-capable state, and performing at least one of reception of an uplink frame or transmission of a downlink frame by using at least one of the active link or the power saving link.

## Description

### Technical field

The present invention relates to a wireless local area network (WLAN) system, and more particularly, to a method and apparatus for power saving communication using multiple links in a WLAN system.

### Background Art

Recently, as the spread of mobile devices expands, a wireless local area network technology capable of providing fast wireless communication services to mobile devices is in the spotlight. The wireless local area network (LAN) technology may be a technology that supports mobile devices such as smart phones, smart pads, laptop computers, portable multimedia players, embedded devices, and the like to wirelessly access the Internet based on wireless communication technology.

As applications requiring higher throughput and applications requiring real-time transmission occur, an expanded frequency bandwidth and/or an efficient retransmitting operation may be supported in a WLAN. In addition, an operation of simultaneously using multiple links or links may be supported.

Meanwhile, the technologies that are described in the Background section are written to improve the understanding of the background of the present disclosure and may include content that is not already known to those of ordinary skill in the art to which the present disclosure belongs.

### Description of Invention

### Technical Problem

The present disclosure is directed to providing a method and apparatus for performing smooth communication when interference or communication interruption occurs because of non-WLAN or WLAN direct communication in a WLAN system.

The present disclosure is directed to providing a method and apparatus for stable communication when interference or communication interruption occurs because of non-WLAN or WLAN direct communication in a WLAN system.

The present disclosure is directed to providing a method and apparatus that are capable of performing a power saving operation on at least one link in a WLAN system.

The present disclosure is directed to providing a method and apparatus for stable communication when a power saving operation is performed on at least one link in a WLAN system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

### Technical Solution

According to an embodiment of the present disclosure, a method for operating an access point (AP) in a WLAN system includes receiving a frame including information for transitioning a power saving link into a communication-capable state by using an active link, transmitting a response frame by using the active link, transitioning the power saving link into the communication-capable state, and performing at least one of reception of an uplink frame or transmission of a downlink frame by using at least one of the active link or the power saving link.

According to an embodiment of the present disclosure, a method for operating a station (STA) in a WLAN system includes transmitting a frame including information for transitioning a power saving link into a communication-capable state by using an active link, receiving a response frame by using the active link, performing a channel access procedure on the power saving link, and performing at least one of reception of an uplink frame or transmission of a downlink frame by using the active link and the power saving link.

According to an embodiment of the present disclosure, an AP in a WLAN system includes a transceiver and a processor coupled to the transceiver, wherein the processor is configured to: receive a frame including information for transitioning a power saving link into a communication-capable state by using an active link; transmit a response frame by using the active link; transition the power saving link into the communication-capable state; and perform at least one of reception of an uplink frame or transmission of a downlink frame by using the active link and the power saving link.

According to an embodiment of the present disclosure, an STA in a WLAN system includes a transceiver and a processor coupled to the transceiver, wherein the processor is configured to: transmit a frame including information for transitioning a power saving link into a communication-capable state by using an active link; receive a response frame by using the active link; perform a channel access procedure on the power saving link; and perform at least one of reception of an uplink frame or transmission of a downlink frame by using the active link and the power saving link.

According to an embodiment of the present disclosure, a non-transitory computer-readable medium storing at least one instruction includes the at least one instruction that is executable by a processor, wherein the at least one instruction instructs a device to: receive a frame including information for transitioning a power saving link into a communication-capable state by using an active link; transmit a response frame by using the active link; transition the power saving link into the communication-capable state; and perform at least one of reception of an uplink frame or transmission of a downlink frame by using the active link and the power saving link.

### Advantageous Effects

According to the present disclosure, a power saving operation can be performed on at least one of multiple links.

According to the present disclosure, smooth communication can be performed on a link on which a power saving operation is performed.

According to the present disclosure, data can be transmitted and received using a link on which a power saving operation is performed.

Effects obtained in the present disclosure are not limited to the above-mentioned effects, and other effects not mentioned above may be clearly derived and understood by those skilled in the art, to which a technical configuration of the present disclosure is applied, from the following description of embodiments of the present disclosure. That is, effects, which are not intended when implementing a configuration described in the present disclosure, may also be derived by those skilled in the art from the embodiments of the present disclosure.

### Description of the Drawings

FIG. 1 is a block diagram illustrating a first embodiment of a communication node constituting a WLAN system.
FIG. 2 is a conceptual diagram illustrating a first embodiment of multiple links configured between multi-link devices (MLDs).
FIG. 3 illustrates a first embodiment of a communication method during an AP power saving operation in a WLAN system.
FIG. 4 illustrates a second embodiment of a communication method during an AP power saving operation in a WLAN system.
FIG. 5 illustrates a third embodiment of a communication method during an AP power saving operation in a WLAN system.
FIG. 6A illustrates a fourth embodiment of a communication method during an AP power saving operation in a WLAN system.
FIG. 6B illustrates a fifth embodiment of a communication method during an AP power saving operation in a WLAN system.
FIG. 7 illustrates a sixth embodiment of a communication method during an AP power saving operation in a WLAN system.
FIG. 8A illustrates a seventh embodiment of a communication method during an AP power saving operation in a WLAN system.
FIG. 8B illustrates an eighth embodiment of a communication method during an AP power saving operation in a WLAN system
FIG. 9 illustrates a ninth embodiment of a communication method during an AP power saving operation in a WLAN system
FIG. 10 illustrates a flowchart in which an AP according to an embodiment of the present disclosure performs communication using a power saving link.
FIG. 11 illustrates a flowchart in which an STA according to an embodiment of the present disclosure performs communication using a power saving link.

### Modes of the Invention

The present disclosure may have various modifications and embodiments, and specific embodiments are illustrated in the drawings and described in detail in the detailed description. However, this is not intended to limit the present disclosure to specific embodiments, but should be understood to include all modifications, equivalents, or substitutes included in the spirit and technical scope of the present disclosure.

The terms first, second, etc. may be used to describe various components, but the components should not be limited by the terms. The terms are only used for the purpose of distinguishing one component from another. For example, without departing from the scope of the present disclosure, the first component may be referred to as the second component, and similarly, the second component may also be referred to as the first component. The term and/or includes a combination of a plurality of related described items or any item among a plurality of related described items.

When it is said that a component is 'coupled with/to' or 'connected to' another component, it should be understood that the one component is connected to the other component directly or through any other component in between. On the other hand, when it is said that a component is 'directly connected to' or 'directly coupled to' another component, it should be understood that there is no other component between the components.

The terminology used in the present disclosure is only used to describe specific embodiments and is not intended to limit the present disclosure. The singular expression includes the plural expression unless the context clearly indicates otherwise. In the present disclosure, terms such as "include" or "have" are intended to specify the presence of a feature, number, step, operation, component, part or combination thereof described in the specification, but should be understood not to exclude in advance the possibility of the presence or addition of one or more other features, numbers, steps, operations, components, parts or combinations thereof.

Unless otherwise defined, all terms used herein, including technical or scientific terms, have the same meaning as commonly understood by one of ordinary skill in the art to which this invention pertains. Terms defined in commonly used dictionaries should be interpreted as having a meaning consistent with their meaning in the context of the relevant technology, and will not be interpreted in an idealized or overly formal sense unless explicitly defined herein.

Hereinafter, with reference to the attached drawings, preferred embodiments of the present invention will be described in more detail. In order to facilitate an overall understanding in describing the present invention, identical reference numerals are used for identical components in the drawings, and redundant descriptions of identical components are omitted.

Below, a wireless communication system to which embodiments of the present invention are applied will be described. The wireless communication system to which embodiments of the present invention are applied is not limited to the description below, and embodiments of the present invention can be applied to various wireless communication systems. The wireless communication system may be referred to as a "wireless communication network."

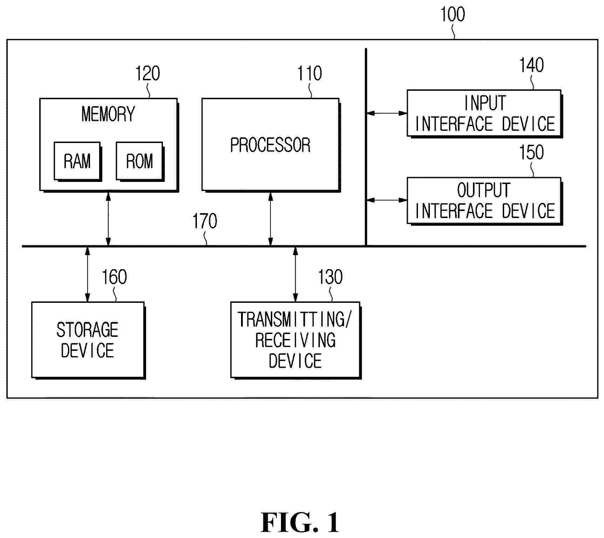

FIG. 1 illustrates a block diagram of a communication node in a WLAN system.

Referring to FIG. 1, a communication node 100 may be an access point (AP), a station (STA), an AP multi-link device (MLD), or a non-AP MLD. A STA may be a non-AP STA. An operating channel width supported by an AP may be 20 MHz, 80 MHz, or 160 MHz. An operating channel width supported by a STA may be 20 MHz or 80 MHz.

The communication node 100 may include at least one processor 110, a memory 120, and at least one transmitting/receiving device 130 that is connected to a network and performs communication. The transmitting/receiving device 130 may also be referred to as a transceiver, a radio frequency (RF) unit, or a RF module. In addition, the communication node 100 may further include an input interface device 140, an output interface device 150, and a storage device 160. Components included in the communication node 100 may be connected by a bus 170 and perform communication between them.

However, each component included in the communication node 100 may be connected not by the common bus 170 but by an individual interface or individual bus around the processor 110. For example, the processor 110 may be connected to at least one of the memory 120, the transmitting/receiving device 130, the input interface device 140, the output interface device 150, and the storage device 160 through a dedicated interface.

The processor 110 may execute a program command stored in at least one of the memory 120 and the storage device 160. The processor 110 may be a central processing unit (CPU), a graphics processing unit (GPU), or a dedicated processor that performs methods according to the embodiments of the present invention. The memory 120 and the storage device 160 may each be formed as at least one of a volatile storage medium and a non-volatile storage medium. For example, the memory 120 may be formed as at least one of a read only memory (ROM) and a random access memory (RAM).

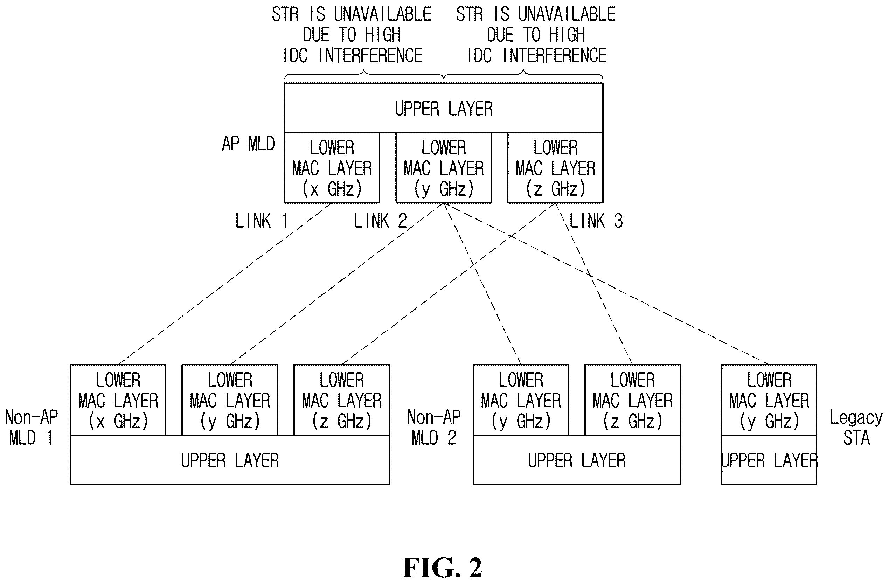

FIG. 2 illustrates the concept of multiple links set between multi link devices (MLDs) in a WLAN system.

Referring to FIG. 2, an MLD may have one medium access control (MAC) address. In embodiments, an MLD may be an AP MLD and/or a non-AP MLD. The MAC address of an MLD may be used in a multi-link setup procedure between a non-AP MLD and an AP MLD. The MAC address of an AP MLD may be different from the MAC address of a non-AP MLD. An Ap(s) associated with an AP MLD may have a different MAC address, and an STA(s) associated with a non-AP MLD may have a different MAC address. APs present in an AP MLD and having different MAC addresses may be in charge of respective links and serve as independent APs.

STAs present in a non- AP MLD and having different MAC addresses may be in charge of respective links and serve as independent STAs. A non-AP MLD may be referred to as a STA MLD. An MLD may support a simultaneous transmit and receive (STR) operation. In this case, the MLD may perform a transmitting operation on Link 1 and a receiving operation on Link 2. An MLD supporting an STR operation may be referred to as an STR MLD (e.g., an STR AP MLD or an STR non-AP MLD). In embodiments, a link may be a channel or a band. A device not supporting an STR operation may be referred to as a non-STR (NSTR) AP MLD or an NSTR non-AP MLD (or NSTR STA MLD).

An MLD may transmit and receive a frame over multiple links using a non-contiguous bandwidth extension scheme (e.g., 80 MHz+80 MHz). A multi-link operation may include multi-band transmission. An AP MLD may include a plurality of APs, and the plurality of APs may operate on different links. A plurality of APs may each perform a function of a lower MAC layer. A plurality of APs may each be referred to as "a communication node" or "a lower entity". A communication node (that is, AP) may operation according to the control of an upper layer (or the processor 110 illustrated in FIG. 1). A non-AP MLD may include a plurality of STAs, and the plurality of STAs may operate on different links. A plurality of STAs may each be referred to as "a communication node" or "a lower entity". A communication node (e.g., STA) may operate according to the control of an upper layer (or the processor 110 illustrated in FIG. 1).

An MLD may perform communication over multiple bands. For example, an MLD may perform communication using a bandwidth of 40 MHz in a band of 2.4 GHz according to a channel expansion scheme (e.g., a bandwidth expansion scheme) and perform communication using a bandwidth of 160 MHz in a band of 5 GHz according to the channel expansion scheme. An MLD may perform communication using the bandwidth of 160 MHz in the band of 5 GHz and perform communication using the bandwidth of 160 MHz in a band of 6 GHz. A single frequency band (e.g., a single channel) used by an MLD may be defined as a single link. Alternatively, a plurality of links may be set in a single frequency band used by an MLD. For example, an MLD may set one link in the band of 2.4 GHz and set two links in the band of 6 GHz. The links may be referred to as a first link, a second link, and a third link respectively. Alternatively, the links may be referred to as Link 1, Link 2, and Link 3 respectively. A link number may be set by an AP, and an identifier (ID) may be assigned to each link.

An MLD (e.g., an AP MLD and/or a non-AP MLD) may set multiple links by performing an access procedure and/or a negotiation procedure for a multi-link operation. In this case, the number of links and/or a link to be used among multiple links may be set. A non-AP MLD (e.g., a STA) may identify information on a band in which communication with an AP MLD is possible. In a negotiation procedure for a multi-link operation between a non-AP MLD and an AP MLD, the non-AP MLD may set one or more links among links supported by the AP MLD to be used for the multi-link operation. A STA (e.g., a STA according to IEEE 802.11a/b/g/n/ac/ax) not supporting the multi-link operation may access one or more links among multiple links supported by an AP MLD.

When a band gap between multiple links (e.g., a band gap between Link 1 and Link 2 in the frequency domain) is sufficient, an MLD may perform an STR operation. For example, the MLD may transmit physical layer convergence procedure (PLCP) protocol data (PPDU) 1 using Link 1 among the multiple links and receive PPDU 2 using Link 2 among the multiple links. On the other hand, when a band gap between multiple links is not sufficient and an MLD performs an STR operation, in-device coexistence (IDC) interference, that is, interference between multiple links may occur. Accordingly, when a band gap between multiple links is not sufficient, an MLD may not perform an STR operation. A pair of links in the above-described interference relationship may be a pair of links limited to non simultaneous transmit and receive (NSTR). Here, an MLD may be an NSTR AP MLD or an NSTR non-AP MLD.

For example, multiple links including Link 1, Link 2, and Link 3 may be set between an AP MLD and a non-AP MLD 1. When a band gap between Link 1 and Link 3 is sufficient, the AP MLD may perform an STR operation using Link 1 and Link 3. That is, the AP MLD may transmit a frame using Link 1 and receive a frame using Link 3. When a band gap between Link 1 and Link 2 is not sufficient, the AP MLD may not perform the STR operation using Link 1 and Link 2. When a band gap between Link 2 and Link 3 is not sufficient, the AP MLD may not perform the STR operation using Link 2 and Link 3.

Meanwhile, in a WLAN system, a negotiation procedure for a multi-link operation may be performed in an access procedure between an STA and an AP.

A device supporting multiple links (e.g., an AP or an STA) may be referred to as a multi-link device (MLD). An AP supporting multiple links may be referred to as an AP MLD, and an STA supporting multiple links may be referred to as a non-AP MLD or an STA MLD. An AP MLD may have a physical address (e.g., an MAC address) for each link. An AP MLD may be implemented as if an AP in charge of each link exists separately. A plurality of APs may be managed in a single AP MLD. Accordingly, coordination may be possible among a plurality of APs that belong to the same AP MLD. An STA MLD may have a physical address (e.g., an MAC address) for each link. An STA MLD may be implemented as if an STA in charge of each link exists separately. A plurality of STAs may be managed in a single STA MLD. Accordingly, coordination may be possible among a plurality of STAs that belong to the same STA MLD.

For example, AP1 of an AP MLD and STA1 of an STA MLD may each be in charge of a first link and perform communication using the first link. AP2 of the AP MLD and STA2 of the STA MLD may each be in charge of a second link and perform communication using the second link. STA2 may receive state change information for the first link on the second link. In this case, the STA MLD may collect information (e.g., state change information) received from each link and control an operation performed by STA1 based on the collected information.

Next, methods for transmitting and receiving data in a wireless LAN system will be described. When a method (e.g., transmission or reception of a signal) performed at a first communication node among communication nodes is described, a second communication node corresponding to it may perform a method (e.g., reception or transmission of a signal) corresponding to the method performed at the first communication node. That is, when an operation of an STA is described, an AP corresponding to it may perform an operation corresponding to the operation of the STA. On the other hand, when an operation of an AP is described, an STA corresponding to it may perform an operation corresponding to the operation of the AP. In an embodiment, an operation of an STA may be interpreted as an operation of an STA MLD, an operation of an STA MLD may be interpreted as an operation of an STA, an operation of an AP may be interpreted as an operation of an AP MLD, and an operation of an AP MLD may be interpreted as an operation of an AP.

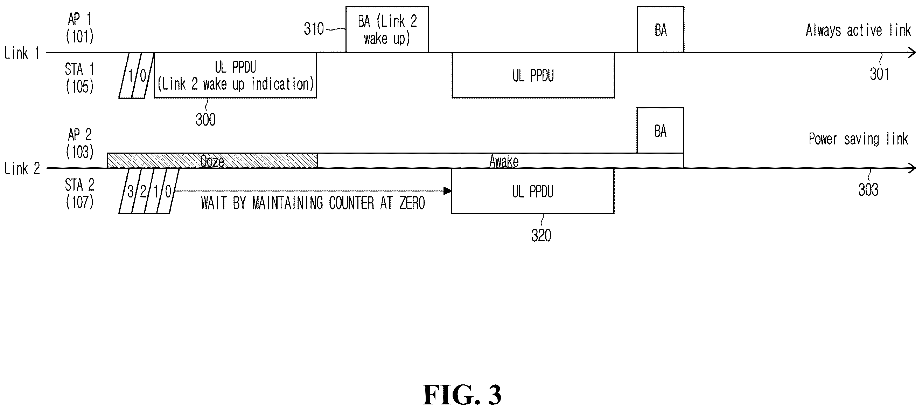

FIG. 3 illustrates a first embodiment of a communication method during an AP power saving operation in a WLAN system.

Referring to FIG. 3, an AP MLD and an STA MLD may operate on a first link 301 and a second link 303. An AP of the AP MLD operating on the first link 301 is AP 1 101, and an AP of the AP MLD operating on the second link 303 is AP 2 103. An STA of the STA MLD operating on the first link 301 is STA 1 105, and an STA of the STA MLD operating on the second link 303 is STA 2 107. The AP MLD may use an unscheduled power saving operation. For example, the AP MLD may not perform a power saving operation on the first link 301 but perform the power saving operation on the second link 303. When the AP MLD operates the power saving operation on the second link 303, AP2 103 may operate in doze and awake states. The doze state may be a state in which power consumption is low. An AP operating in the doze state is incapable of channel sensing and data transmission/reception. On the other hand, depending on the capability of an AP, data transmission/reception is impossible while channel sensing may be possible or limited reception of a frame or a signal may be possible in the doze state. For example, in the doze state, at least one of a specific frame with a predetermined format (e.g., an initial control frame) or a physical layer preamble may be received. The awake state may be a state in which power consumption is present. An AP in the awake state is capable of channel sensing and data transmission/reception. AP 2 103 operating on the second link 303 may operate in the awake state or operate in the doze state according to a data transmission/reception situation of STA 1 105 and/or AP 1 101 on the first link 301 and a use request for the second link 303. For example, when the AP MLD intends to transmit a downlink PPDU using both the first link 301 and the second link 303, AP 2 103 on the second link 303 may operate in the awake state. On the other hand, when the STA MLD requests the use of the second link 303 through a request transmitted on the link 301, that is, when the STA MLD requests the use of the second link 303 to transmit data to the AP MLD using the second link 303, AP 2 103 on the second link 303 may operate in the awake state. When the use of the second link 303 is not required, AP 2 103 on the second link 303 may operate in the doze state. When the AP MLD does not perform the power saving operation on the first link 301 but operate in the doze state on the second link 303, the operating frequency bandwidth of the AP MLD may become narrower. When the AP MLD does not perform the power saving operation on the first link 301 but operate in the awake state on the second link 303, the operating frequency bandwidth of the AP MLD may become wider. That is, the operation capability of the AP MLD may vary depending on the power saving operation state of the first link 301 and/or the second link 303. A narrow operating frequency bandwidth indicates a narrow bandwidth of a data frame available for transmission and reception. A wide operating frequency bandwidth indicates a wide bandwidth of the data frame available for transmission and reception.

On the first link 301 and the second link 303, the STA MLD may have an uplink frame to be transmitted. The uplink frame may be, for example, a PHY layer protocol data unit (PPDU), an MAC layer protocol data unit (MPDU), or an aggregated-MDPU (A-MDPU), and STA 1 105 and STA 2 107 of the STA MLD may perform a per-link channel access operation. The channel access operation may be an EDCA backoff operation. The channel access operation may be performed by EDCAFs on each link. Channel access operations on the first link 301 and the second link 303 may be successful simultaneously or at different times. The success of the channel access operations may mean that the backoff counters of the EDCAFs have reached zero. On the first link 301, when the channel access operation is successful, STA 1 105 may transmit an uplink frame 300 to AP 1 101. The uplink frame 300 that is initially transmitted by STA 1 105 may be a short frame such as a QoS Null frame or an action frame. Alternatively, the uplink frame 300 that is initially transmitted by STA 1 105 may be a QoS data frame. On the second link 303, even when the channel access operation is successful, STA 2 107 maintains the backoff counter at zero and waits without transmitting a frame. The length of the uplink frame 300 that is initially transmitted by STA 1 105 may be greater than or equal to a time length required for AP 2 103 to transition from the doze state into the awake state. The uplink frame 300 that is initially transmitted by STA 1 105 may include information requesting use of the second link 303. The information requesting use of the second link may include information available for identifying the link. For example, the information requesting use of the second link includes at least one of a link bitmap or a link identifier (ID). The information requesting use of the second link may be included in an MAC header included in an uplink frame in the form of A-Control, subfield, or information element. The information requesting use of the second link may be included in the uplink frame 300 in the form of an action frame and in the form of an information element included in the action frame. AP 1 101 may receive the frame 300 transmitted by STA 1 105 and confirm the information requesting use of the second link. The AP MLD may enable AP 2 103 of the second link 303 to transition from the doze state into the awake state based on the information requesting use of the second link that is transmitted by STA 1 105. AP 1 101 may use a response frame 310 to respond to the uplink frame 300 of STA 1 105. For example, the response frame 310 may include an ACK frame or a BlockAck (BA) frame. AP 1 101 may transmit the response frame 310, thereby indicating that the second link 303 is available. Alternatively, AP 1 101 may include an additional bit in the number of bits indicating a reception state corresponding to the number of received MPDUs included in BA, thereby indicating that the second link 303 is available. When the additional bit is 0, it may indicate that the second link 303 is unavailable, and when the additional bit is 1, it may indicate that the second link 303 is available. The number of additional bits to be added may be equal to the number of links requested for use. Alternatively, AP 1 101 may include at least one of information regarding whether the second link 303 is available, an ID of the second link 303, or a link bitmap in the response frame 310, thereby indicating information indicating the availability of the second link. For example, AP 1 101 may configure and transmit a BA frame and a QoS Null frame in the form of A-MPDU. An MAC header of the QoS Null frame may include information indicating that the second link is available. The information indicating that the second link is available may be included in the response frame 310 in the form of A-Control or may be included in the form of subfield and information element. As another example, AP 1 101 may configure and transmit the BA frame and an action frame in the form of A-MPDU. The information indicating that the second link is available may be indicated in the action frame or in the form of information element included in the action frame. When AP 1 101 indicates that the second link 303 is unavailable, STA 2 107 may not transmit the uplink frame 302 on the second link 303. When AP 1 101 indicates that the second link 303 is available, STA 2 107 may transmit the uplink frame 320 on the second link 303 and receive a response frame from AP 2 103.

The STA MLD may be incapable of performing simultaneous transmission/reception on the first link 301 and the second link 303. In other words, the first link 301 and the second link 303 may be an NSTR link pair. When the STA MLD has the NSTR link pair, the frame transmission start times of the first link 301 and the second link 303 may be synchronized. For example, the frame transmission start times of the first link 301 and the second link 303 may be the same or different within a predetermined time period. For example, the predetermined time period may be 4us. When the STA MLD has the NSTR link pair, channel sensing on the second link 303 may be impossible during frame transmission on the first link 301. Even when channel sensing on the second link 303 is impossible, STA 2 107 may maintain the backoff counter at zero or select a new backoff counter. As another example, STA 2 107 may synchronize a frame with STA 1 105 and transmit the frame when the second link 303 is in an idle state during a PIFS prior to a transmission start time of a frame transmitted by STA 1 105.

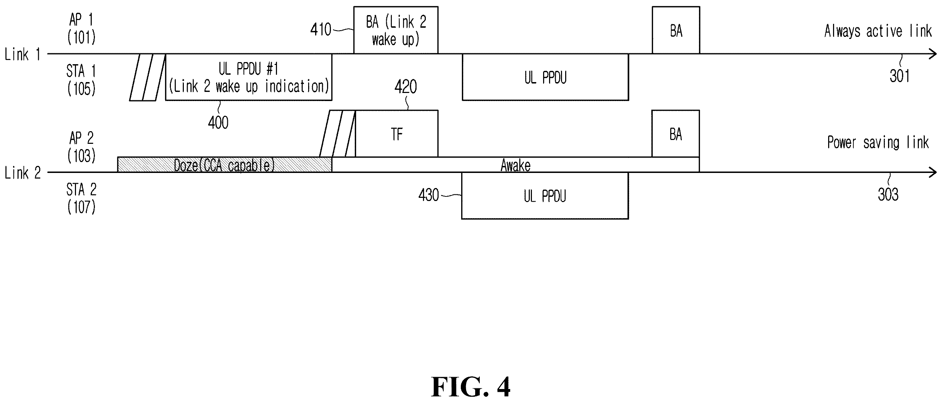

FIG. 4 illustrates a second embodiment of a communication method during an AP power saving operation in a WLAN system.

Referring to FIG. 4, an AP MLD and an STA MLD may operate on the first link 301 and the second link 303. An AP of the AP MLD operating on the first link 301 is AP 1 101, and an AP of the AP MLD operating on the second link 303 is AP 2 103. An STA of the STA MLD operating on the first link 301 is STA 1 105, and an STA of the STA MLD operating on the second link 303 is STA 2 107. The AP MLD may use an unscheduled power saving operation. For example, the AP MLD may not perform a power saving operation on the first link 301 but perform the power saving operation on the second link 303. When the AP MLD operates the power saving operation on the second link 303, AP2 103 may operate in doze and awake states. The doze state may be a state in which power consumption is low. An AP operating in the doze state is incapable of channel sensing and data transmission/reception. On the other hand, depending on the capability of an AP, data transmission/reception is impossible while channel sensing may be possible or limited reception of a frame or a signal may be possible in the doze state. For example, in the doze state, at least one of a specific frame with a predetermined format (e.g., an initial control frame) or a physical layer preamble may be received. The awake state may be a state in which power consumption is present. An AP in the awake state is capable of channel sensing and data transmission/reception. AP 2 103 operating on the second link 303 may operate in the awake state or operate in the doze state according to a data transmission/reception situation of STA 1 105 and/or AP 1 101 on the first link 301 and a use request for the second link 303. For example, when the AP MLD intends to transmit a downlink PPDU using both the first link 301 and the second link 303, AP 2 103 on the second link 303 may operate in the awake state. Alternatively, when the STA MLD requests the use of the second link 303 through a request transmitted on the link 301, that is, when the STA MLD requests the use of the second link 303 to transmit data to the AP MLD using the second link 303, AP 2 103 on the second link 303 may operate in the awake state. When the use of the second link 303 is not required, AP 2 103 on the second link 303 may operate in the doze state. When the AP MLD does not perform the power saving operation on the first link 301 but operate in the doze state on the second link 303, the operating frequency bandwidth of the AP MLD may become narrower. When the AP MLD does not perform the power saving operation on the first link 301 but operate in the awake state on the second link 303, the operating frequency bandwidth of the AP MLD may become wider. That is, the operation capability of the AP MLD may vary depending on the power saving operation state of the first link 301 and/or the second link 303. A narrow operating frequency bandwidth indicates a narrow bandwidth of a data frame available for transmission and reception. A wide operating frequency bandwidth indicates a wide bandwidth of the data frame available for transmission and reception.

On the first link 301 and the second link 303, the STA MLD may intend to transmit an uplink frame. The uplink frame may be, for example, a physical layer protocol data unit (PPDU), a medium access control layer protocol data unit (MPDU), or an aggregated MPDU (A-MPDU). STA 1 105 of the STA MLD may perform a channel access procedure. The channel access operation may be an EDCA backoff operation. The channel access operation may be performed by EDCAFs. The success of the channel access operations may mean that the backoff counters of the EDCAFs have reached zero. On the first link 301, when the channel access operation is successful, STA 1 105 may transmit an uplink frame 400 to AP 1 101. The uplink frame 400 that is initially transmitted by STA 1 105 may be a short frame such as a QoS Null frame or an action frame. Alternatively, the uplink frame 400 that is initially transmitted by STA 1 105 may be a QoS data frame. The length of the uplink frame 400 that is initially transmitted by STA 1 105 may be greater than or equal to a time length required for AP 2 103 to transition from the doze state into the awake state. The uplink frame 400 that is initially transmitted by STA 1 105 may include information requesting use of the second link. The information requesting use of the second link may include information available for identifying the link (e.g., at least one of a link bitmap or a link ID). The information requesting use of the second link may be included in an MAC header included in the uplink frame 400 in the form of A-Control, subfield, or information element. The information requesting use of the second link may be included in the uplink frame 400 in the form of an action frame and in the form of an information element included in the action frame. AP 1 101 may receive the uplink frame 400 transmitted by STA 1 105 and confirm the information requesting use of the second link. The AP MLD may enable the second link 303 to transition from the doze state into the awake state based on the information requesting use of the second link that is transmitted by STA 1 105 and may perform a channel access procedure. When AP 2 103 is an AP capable of channel sensing in the doze state, AP 2 103 may also perform the channel access procedure in the doze state. When AP 2 103 is an AP incapable of channel sensing in the doze state, AP 2 103 may perform the channel access procedure while operating in the awake state, and the channel access procedure may be performed upon operation in the awake state or after a predetermined time period following the operation in the awake state. The predetermined time period may be NAVSyncDelay or MediumSyncDelay. That is, after a NAVSync timer or a MediumSync timer expires, the channel access procedure may be performed. The predetermined time period may be a time taken for wireless medium synchronization. As another method, the channel access procedure is performed upon operation in the awake state. On the other hand, the channel access procedure may be performed even before a timer expires. When the channel access procedure is successful within NAVSyncDelay or MediumSyncDelay, frame transmission may be restricted or may be repeatedly performed until NAVSyncDelay or MediumSyncDelay ends. For example, the restriction on the frame transmission may be limited to the transmission of a RTS frame. AP 1 101 may use a response frame 410 to respond to the uplink frame 400 of STA 1 105. For example, the response frame 410 may include an ACK frame or a BlockAck (BA) frame. The transmission of the response frame 410 by AP 1 101 may indicate that the second link 303 is available. Alternatively, AP 1 101 may include an additional bit in the number of bits indicating a reception state corresponding to the number of received MPDUs included in BA, thereby indicating that the second link 303 is available. When the additional bit is 0, it may indicate that the second link 303 is unavailable, and when the additional bit is 1, it may indicate that the second link 303 is available. The number of additional bits to be added may be equal to the number of links requested for use. Alternatively, AP 1 101 may include at least one of information regarding whether the second link 303 is available, an ID of the second link 303, or a link bitmap in the response frame 410, thereby indicating information indicating the availability of the second link. For example, AP 1 101 may configure and transmit a BA frame and a QoS Null frame in the form of A-MPDU. An MAC header of the QoS Null frame may include information indicating that the second link is available. The information indicating that the second link is available may be included in the form of A-Control or may be included in the form of subfield and information element. As another example, AP 1 101 may configure and transmit the BA frame and an action frame in the form of A-MPDU. The information indicating that the second link is available may be indicated in the action frame or in the form of information element included in the action frame. When AP 1 101 indicates that the second link 303 is unavailable, STA 2 107 cannot receive a frame on the second link 303. When AP 1 101 indicates that the second link 303 is available, STA 2 107 may receive a trigger frame 420 or a CTS frame of AP 2 103 on the second link 303. Alternatively, the trigger frame 420 or the CTS frame transmitted by AP 2 103 on the second link 303 may indicate the availability of the second link 303. The trigger frame 420 or the CTS frame of AP 2 103 may be transmitted after the channel access of AP 2 103 is successful on the second link 303. In another method, the trigger frame 420 or the CTS frame of AP 2 103 may be transmitted immediately without channel access procedure on the second link 303 or when the channel is idle during PIFS. When STA 2 107 receives the trigger frame 420 or the CTS frame of AP 2 103, STA 2 107 may transmit an uplink PPDU 430 on the second link 303.

The STA MLD may be incapable of performing simultaneous transmission/reception on the first link 301 and the second link 303. That is, the STA MLD may have the first link 301 and the second link 303 as an NSTR link pair. When the STA MLD has the NSTR link pair, the frame transmission end times of the first link 301 and the second link 303 may be synchronized. For example, on the first link 301 and the second link 303, an BA frame transmission end time of AP 1 101 and a transmission end time of AP 2 103 for the trigger frame 420 or the CTS frame may be the same or different within a predetermined time period. For example, the predetermined time period may be 12us. On the first link 301 and the second link 303, the uplink PPDU transmission start times of STA 1 105 and STA 2 107 may be synchronized.

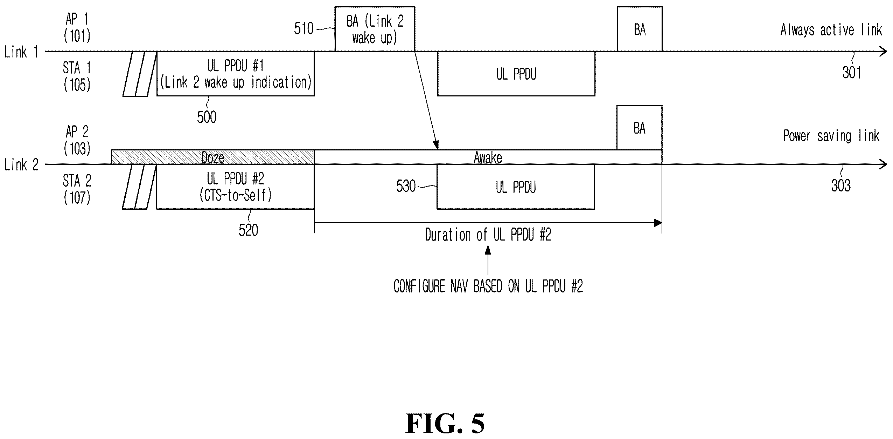

FIG. 5 illustrates a third embodiment of a communication method during an AP power saving operation in a WLAN system.

Referring to FIG. 5, an AP MLD and an STA MLD may operate on the first link 301 and the second link 303. An AP of the AP MLD operating on the first link 301 is AP 1 101, and an AP of the AP MLD operating on the second link 303 is AP 2 103. An STA of the STA MLD operating on the first link 301 is STA 1 105, and an STA of the STA MLD operating on the second link 303 is STA 2 107. The AP MLD may use an unscheduled power saving operation. For example, the AP MLD may not perform a power saving operation on the first link 301 but perform the power saving operation on the second link 303. When the AP MLD operates the power saving operation on the second link 303, AP2 103 may operate in doze and awake states. The doze state may be a state in which power consumption is low, and an AP operating in the doze state is incapable of channel sensing and data transmission/reception. On the other hand, depending on the capability of an AP, data transmission/reception is impossible while channel sensing may be possible or limited reception of a frame or a signal may be possible in the doze state. For example, in the doze state, at least one of a specific frame with a predetermined format (e.g., an initial control frame) or a physical layer preamble may be received. The awake state may be a state in which power consumption is present, and an AP is capable of channel sensing and data transmission/reception. AP 2 103 operating on the second link 303 may operate in the awake state or operate in the doze state according to a data transmission/reception situation of STA 1 105 and/or AP 1 101 on the first link 301 and a use request for the second link 303. For example, when the AP MLD intends to transmit a downlink PPDU using both the first link 301 and the second link 303, AP 2 103 on the second link 303 may operate in the awake state. Alternatively, when the STA MLD requests the use of the second link 303 through a request transmitted on the link 301, that is, when the STA MLD requests the use of the second link 303 to transmit data to the AP MLD using the second link 303, AP 2 103 on the second link 303 may operate in the awake state. When the use of the second link 303 is not required, AP 2 103 on the second link 303 may operate in the doze state. When the AP MLD does not perform the power saving operation on the first link but operate in the doze state on the second link, the operating frequency bandwidth of the AP MLD may become narrower. When the AP MLD does not perform the power saving operation on the first link but operate in the awake state on the second link, the operating frequency bandwidth of the AP MLD may become wider. That is, the operation capability of the AP MLD may vary depending on the power saving operation states of the first link and the second link. A narrow operating frequency bandwidth indicates a narrow bandwidth of a data frame available for transmission and reception. A wide operating frequency bandwidth indicates a wide bandwidth of a data frame available for transmission and reception.

On the first link 301 and the second link 303, the STA MLD may intend to transmit an uplink frame 500. For example, the uplink frame 500 may include a PPDU, an MPDU, and an A-MPDU. STA 1 105 and STA 2 107 of the STA MLD may perform a per-link channel access operation. The channel access operation may be an EDCA backoff operation. The channel access operation may be performed by EDCAFs on each link. Channel access operations on the first link 301 and the second link 303 may be successful simultaneously or at different times. The success of the channel access operations may mean that the backoff counters of the EDCAFs have reached zero. On the first link 301, when the channel access operation is successful, STA 1 105 may transmit an uplink frame 500 to AP 1 101. The uplink frame 500 that is initially transmitted by STA 1 105 may be a short frame such as a QoS Null frame or an action frame. Alternatively, the uplink frame 500 that is initially transmitted by STA 1 105 may be a QoS data frame. On the second link 303, when the channel access operation is successful, STA 2 107 may transmit a CTS frame 520 or a data frame. The CTS frame 520 of STA 2 107 may be a CTS-to-self frame of which the receiver address is STA 2 107 itself. The CTS frame 520 or the data frame of STA 2 107 is a frame for setting NAV for STAs that are not STA 2 107, and the STAs that are not STA 2 107 may set NAV based on a duration filed of an MAC header and may not perform a channel access operation during the duration, that is, while NAV is set. The EDCAFs of STA 2 107 that did not transmit the CTS-to-self frame 520 may set a transmit NAV (TXNAV) equal to the TXOP length of the EDCAF that transmitted the CTS frame 520, and do not perform channel access operations while the TXNAV is set. For example, the TXOP length may be the sum of a time required to transmit the CTS frame 520 and a time length indicated by a duration field of the CTS frame 520. A frame may be transmitted within the TXNAV during the TXOP of the EDCAF that transmitted the CTS frame 520. The uplink frame 500 that is initially transmitted by STA 1 105 may have a length greater than or equal to a time length required for AP 2 103 to transition from the doze state into the awake state. The uplink frame 500 that is initially transmitted by STA 1 105 may include information requesting use of the second link. The information requesting use of the second link may include information available for identifying the link (e.g., at least one of a link bitmap or a link ID). The information requesting use of the second link may be included in an MAC header included in the uplink frame 500 in the form of A-Control, subfield, or information element. The information requesting use of the second link may be included in the uplink frame 500 in the form of an action frame and in the form of an information element included in the action frame. AP 1 101 may receive the uplink frame 500 transmitted by STA 1 105 and confirm the information requesting use of the second link. The AP MLD may enable the second link 303 to transition from the doze state into the awake state based on the information requesting use of the second link that is transmitted by STA 1 105. AP 1 101 may use a response frame 510 to respond to the uplink frame 500 of STA 1 105. For example, the response frame 510 may include an ACK frame or a BlockAck (BA) frame. The transmission of the response frame 510 by AP 1 101 may indicate that the second link 303 is available. Alternatively, AP 1 101 may include an additional bit in the number of bits indicating a reception state corresponding to the number of received MPDUs included in BA, thereby indicating whether the second link 303 is available. When the additional bit is 0, it may indicate that the second link 303 is unavailable, and when the additional bit is 1, it may indicate that the second link 303 is available. The number of additional bits to be added may be equal to the number of links requested for use. Alternatively, AP 1 101 may include at least one of information regarding whether the second link 303 is available, an ID of the second link 303, or a link bitmap in the response frame 510, thereby indicating information indicating the availability of the second link. For example, AP 1 101 may configure and transmit a BA frame and a QoS Null frame in the form of A-MPDU. An MAC header of the QoS Null frame may include information indicating that the second link is available. The information indicating that the second link is available may be included in the response frame 510 in the form of A-Control or may be included in the form of subfield and information element. As another example, AP 1 101 may configure and transmit the BA frame and an action frame in the form of A-MPDU. The information indicating that the second link is available may be indicated in the action frame or in the form of information element included in the action frame. When AP 1 101 indicates that the second link 303 is unavailable, STA 2 107 may not transmit the uplink frame 530 on the second link 303. When AP 1 101 indicates that the second link 303 is available, STA 2 107 may transmit the uplink frame 530 on the second link 303 and receive a response frame from AP 2 103. Since STA 2 107 has transmitted a frame for setting NAV on the second link 303, STA 2 107 may immediately transmit the uplink frame 530 without channel access operation. In another method, STA 2 107 may transmit the frame 530 when successfully performing the channel access operation or may transmit the frame 530 when the channel is in the idle state during PIFS. After transmitting the initial CTS frame 520 or a data frame, STA 2 107 may perform a channel sensing operation until transmitting the uplink frame 530.

The STA MLD may be incapable of performing simultaneous transmission/reception on the first link 301 and the second link 303. That is, the STA MLD may have the first link 301 and the second link 303 as an NSTR link pair. When the STA MLD has the NSTR link pair, the frame transmission start times and transmission end times of the first link 301 and the second link 303 may be synchronized. For example, the frame transmission start times of the first link 301 and the second link 303 may be the same or different within a predetermined time period. For example, the predetermined time period may be 4us. The CTS frame 520 transmitted by the STA MLD may have a transmission start time and a transmission end time that are synchronized with those of the frame 500 of the first link 301. On the other hand, the CTS frame 520 may be a frame having a predetermined transmission time length. In this case, the transmission end time of the CTS frame 520 may be exceptionally earlier or later than that of the frame 500 of the first link 301.

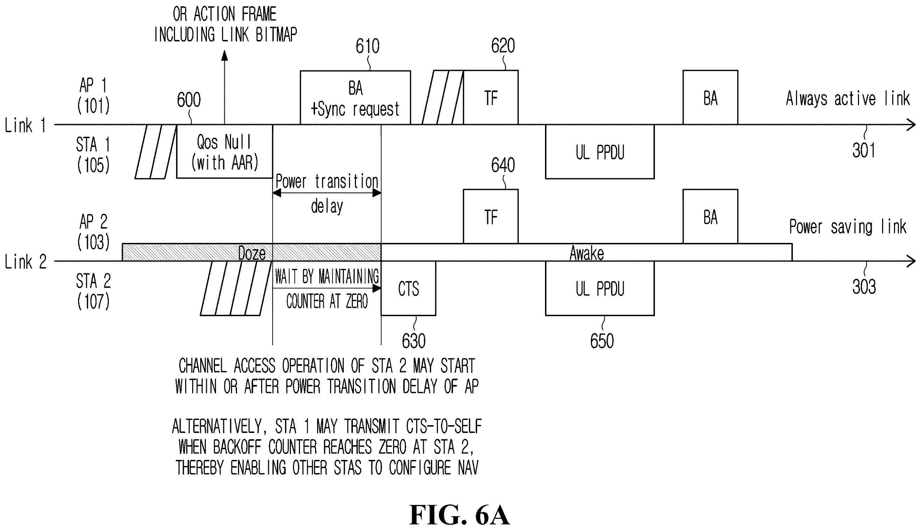

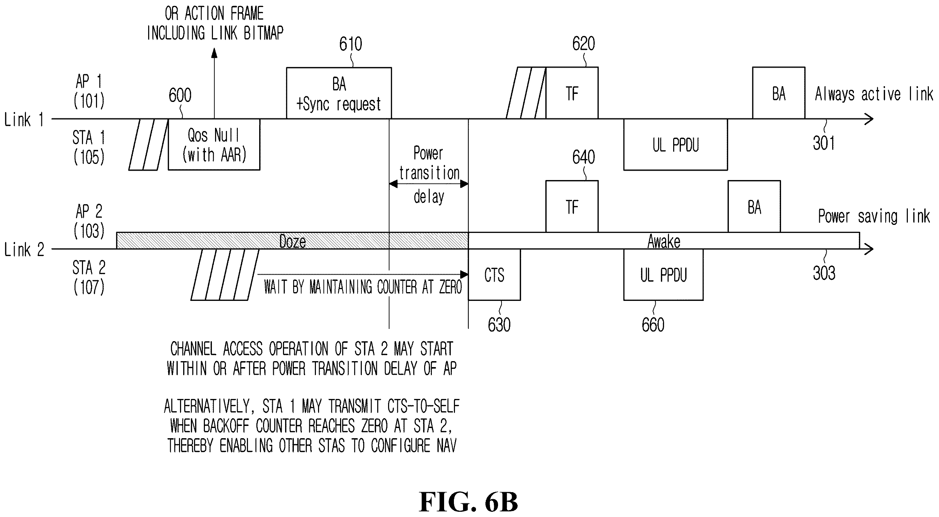

FIG. 6A illustrates a fourth embodiment of a communication method during an AP power saving operation in a WLAN system. FIG. 6B illustrates a fifth embodiment of a communication method during an AP power saving operation in a WLAN system.

Referring to FIG. 6A and FIG. 6b, an AP MLD and an STA MLD may operate on the first link 301 and the second link 303. An AP of the AP MLD operating on the first link 301 is AP 1 101, and an AP of the AP MLD operating on the second link 303 is AP 2 103. An STA of the STA MLD operating on the first link 301 is STA 1 105, and an STA of the STA MLD operating on the second link 303 is STA 2 107. The AP MLD may use an unscheduled power saving operation. For example, the AP MLD may not perform a power saving operation on the first link 301 but perform the power saving operation on the second link 303. When the AP MLD operates the power saving operation on the second link 303, AP2 103 may operate in doze and awake states. The doze state may be a state in which power consumption is low, and an AP operating in the doze state is incapable of channel sensing and data transmission/reception. On the other hand, depending on the capability of an AP, data transmission/reception is impossible while channel sensing may be possible or limited reception of a frame or a signal may be possible in the doze state. For example, in the doze state, at least one of a specific frame with a predetermined format (e.g., an initial control frame) or a physical layer preamble may be received. The awake state may be a state in which power consumption is present, and an AP is capable of channel sensing and data transmission/reception. AP 2 103 operating on the second link 303 may operate in the awake state or operate in the doze state according to a data transmission/reception situation of STA 1 105 and/or AP 1 101 on the first link 301 and a use request for the second link 303. For example, when the AP MLD intends to transmit a downlink PPDU using both the first link 301 and the second link 303, AP 2 103 on the second link 303 may operate in the awake state. On the other hand, when the STA MLD requests the use of the second link 303 through a request transmitted on the first link 301, AP 2 103 on the second link 303 may operate in the awake state. In other words, when the STA MLD requests the use of the second link 303 to transmit data to the AP MDS using the second link 303, AP 2 103 on the second link 303 may operate in the awake state. When the use of the second link 303 is not required, AP 2 103 on the second link 303 may operate in the doze state. When the AP MLD does not perform the power saving operation on the first link 301 but operate in the doze state on the second link 303, the operating frequency bandwidth of the AP MLD may become narrower. When the AP MLD does not perform the power saving operation on the first link 301 but operate in the awake state on the second link 303, the operating frequency bandwidth of the AP MLD may become wider. That is, the operation capability of the AP MLD may vary depending on the power saving operation state of the first link 301 and/or the second link 303. A narrow operating frequency bandwidth indicates a narrow bandwidth of a data frame available for transmission and reception. A wide operating frequency bandwidth indicates a wide bandwidth of the data frame available for transmission and reception.

On the first link 301 and the second link 303, the STA MLD may intend to transmit an uplink frame 600. For example, the uplink frame 600 may include a PPDU, an MPDU, and an A-MPDU. STA 1 105 may perform a channel access operation on the first link 301, and the channel access operation may be an EDCA backoff operation. When STA 1 105 successfully performs the channel access operation on the first link 301, STA 1 105 may transmit the uplink frame 600 to AP 1 101. The uplink frame 600 may be a QoS Null frame, a data frame, or an action frame. The uplink frame 600 may include information requesting to use the second link 303 for transmission to AP 2 103 on the second link 303. For example, an MAC header of the QoS Null frame may include an assisted AP request (AAR) or an A-Control field similar to the AAR. The AAR or the A-Control field similar to the AAR may indicate a trigger frame transmission request of the AP MLD at AP 1 101 and AP 2 103. In another method, information requesting to use AP 2 103 on the second link 303 may be included in various forms of frames such as an information element and a subfield. AP 1 101 may use a response frame 610 to respond to the frame 600 of STA 1 105. The response frame 610 may be an ACK frame or a BlockAck frame. The response frame 610 transmitted by AP 1 101 to STA 1 105 may include Sync Request information. The Sync Request information may be information indicating that frame transmission of STA 2 107 is requested to set medium synchronization of AP 2 103 on the second link 303. The Sync Request information may be included in various forms of frame such as A-Control, subfield, and information element. Alternatively, AP 1 101 may include an additional bit in the number of bits indicating a reception state corresponding to the number of received MPDUs included in BA, thereby indicating whether the second link 303 is available. When the additional bit is 0, it may indicate that the second link 303 is unavailable, and when the additional bit is 1, it may indicate that the second link 303 is available. The number of additional bits to be added may be equal to the number of links requested for use.

Referring to FIG. 6A, a power transition delay may be present when each AP of the AP MLD transitions from the doze state into the awake state. When AP 2 103 transitions from the doze state into the awake state, the power transition delay may be required. The power transition delay may start after the frame 600 transmitted by STA 1 105 and requesting use of AP 2 103 is received. Alternatively, the frame 600 requesting use of AP 2 103 may be in the form of A-MPDU that is composed of a plurality of MPDUs. When the frame is formed as an A-MPDU, the power transition delay may start at a time at which AP 2 103 successfully decodes the first MPDU within the frame 600 including the information transmitted by STA 1 105 and requesting use of AP 2 103. STA 2 107 may perform a channel access operation on the second link 303. The channel access operation of STA 2 107 may be performed while STA 1 105 transmits the frame 600 requesting use of AP 2 103 on the first link 301. Alternatively, STA 2 107 may perform the channel access operation upon completely transmitting the frame 600 requesting use of AP 2 103 on the first link 301. Alternatively, STA 2 107 may perform the channel access operation from a time at which STA 1 105 receives the response frame 610 from AP 1 101 on the first link 301. When a time at which the channel access operation of STA 2 107 is successful is earlier than the power transition delay of AP 2 103, STA 2 107 may maintain the backoff counter at zero. The backoff counter of STA 2 107 may be maintained at zero until a time at which the power transition delay of the AP ends or thereafter. For example, the time at which the channel access operation is successful may be a time at which the backoff counter reaches zero. On the other hand, STA 2 107 may perform the channel access operation again. STA2 107 may transmit a CTS frame 630 after the power transition delay of AP 2 103. The CTS frame 630 may be transmitted as a response to the Sync Request information that is transmitted by AP 1 101 on the first link 301. The RA of the CTS frame 630 may be STA 2 107 itself, or the RA may be AP 2 103. Alternatively, STA 2 107 may transmit a CTS frame (e.g., the CTS frame 520 in FIG. 5) with an RA set to STA 2 107 prior to the power transition delay of AP 2 103 and transmit the CTS frame 630 with an RA set to STA 2 107 or AP 2 103 after the power transition delay of AP 2 103. AP 2 103 may transmit a trigger frame 640 to STA 2 107 after receiving the CTS frame 630 from STA 2 107, and STA 2 107 may transmit an uplink frame 660 to AP 2 103. For example, the uplink frame 660 may include an PPDU, an MPDU, and an A-MPDU. The trigger frame 640 transmitted by AP 2 103 to STA 2 107 may be transmitted through a channel access procedure (e.g., an EDCA backoff operation). In another method, the trigger frame 640 transmitted by AP 2 103 to STA 2 107 may be transmitted when a channel is in the idle state for a predetermined duration (e.g., PIFS, AIFS, or DIFS). When the frame 600 initially transmitted by STA 1 105 to AP 1 101 and including information requesting use of AP 2 103 also requests AP 1 101 to transmit the trigger frame 620 on the first link 301, STA 1 105 and STA 2 107 may perform uplink transmissions based on the trigger frames 620 and 640 from AP 1 101 and AP 2 103. The STA MLD may have the first link 301 and the second link 303 as an NSTR link pair. When the first link 310 and the second link 303 of the STA MLD are the NSTR pair, the transmission start times and/or transmission end times of trigger frames may be synchronized on the first link 301 and the second link 303 of the AP MLD. The transmission start times and/or transmission end times of trigger frames may differ by a predetermined duration." For example, channel access procedures for transmitting trigger frames are performed by AP 1 101 and AP 2 103 on the first link 301 and the second link 303 respectively. The channel access procedure may be an EDCA backoff operation. When channel access procedures end simultaneously at AP 1 101 or AP 2 103, AP 1 101 and AP 2 103 may synchronize and transmit trigger frames 620 and 640. The channel access procedures at AP 1 101 and AP 2 103 may have different end times. For example, the channel access procedure at AP 2 103 may end later than the channel access procedure at AP 1 101. The EDCA backoff counter of AP 1 101 may be maintained at zero, and AP 1 101 may wait without transmitting a frame until the EDCA backoff counter of AP 2 103 reaches zero. When the channel access procedure of AP 2 103 ends, AP 1 101 and AP 2 103 may synchronize and transmit trigger frames 620 and 640. In another method, when the channel access procedure of AP 1 101 ends earlier, AP 1 101 may the trigger frame 620 earlier. When the channel access procedure of AP 2 103 ends, AP 2 103 may transmit the trigger frame 640. To synchronize the end times for the trigger frame 620 transmitted by AP 1 101 and the trigger frame 640 transmitted by AP 2 103, a padding (e.g., a padding field or a padding bit) may be added before and/or at the end of the trigger frame 620 transmitted by AP 1 101, and the end times of the trigger frames 620 and 640 transmitted by AP 1 101 and AP 2 103 are synchronized. A frame check sequence (FCS) field may be added before the padding added to the trigger frame.

Referring to FIG. 6B, a power transition delay may be present when each AP of the AP MLD transitions from the doze state into the awake state. When AP 2 103 transitions from the doze state into the awake state, the power transition delay may be required. The power transition delay may start after the frame 600 transmitted by STA 1 105 and requesting use of AP 2 103 is received. Alternatively, the frame 600 requesting use of AP 2 103 may be configured in the form of A-MPDU. When the frame 600 requesting use of AP 2 103 is configured in the form of A-MPDU, the power transition delay may start from a time at which AP 2 103 receives a response frame 610 to the frame 600 including information transmitted by STA 1 105 and requesting use of AP 2 103. STA 2 107 may perform a channel access operation on the second link 303. The channel access operation of STA 2 107 may be performed while STA 1 105 transmits the frame 600 requesting use of AP 2 103 on the first link 301. Alternatively, STA 2 107 may perform the channel access operation upon completely transmitting the frame 600 requesting use of AP 2 103 on the first link 301. Alternatively, STA 2 107 may perform the channel access operation from a time at which STA 1 105 receives the response frame 610 from AP 1 101 on the first link 301. When a time at which the channel access operation of STA 2 107 is successful is earlier than the power transition delay of AP 2 103, STA 2 107 may maintain the backoff counter at zero. The backoff counter of STA 2 107 may be maintained at zero until a time at which the power transition delay of the AP ends or thereafter. For example, the time at which the channel access operation of STA 2 107 is successful may be a time at which the backoff counter reaches zero. In another method, STA 2 107 may perform the channel access operation again. STA2 107 may transmit a CTS frame 630 after the power transition delay of AP 2 103. The RA of the CTS frame 630 may be STA 2 107 itself, or the RA may be AP 2 103. Alternatively, STA 2 107 may transmit a CTS frame (e.g., the CTS frame 520 in FIG. 5) with an RA set to STA 2 107 prior to the power transition delay of AP 2 103 and transmit the CTS frame 630 with an RA set to STA 2 107 or AP 2 103 after the power transition delay of AP 2 103. AP 2 103 may transmit a trigger frame 640 to STA 2 107 after receiving the CTS frame 630 from STA 2 107, and STA 2 107 may transmit an uplink frame 660 to AP 2 103. For example, the uplink frame 660 may include an PPDU, an MPDU, and an A-MPDU. The trigger frame 640 transmitted by AP 2 103 to STA 2 107 may be transmitted through a channel access procedure. The channel access procedure may include, for example, an EDCA backoff procedure. In another method, the trigger frame 640 transmitted by AP 2 103 to STA 2 107 may be transmitted when a channel is in the idle state for a predetermined duration. For example, the predetermined duration may include at least one of PIFS, AIFS, or DIFS. When the frame 600 initially transmitted by STA 1 105 to AP 1 101 and including information requesting use of AP 2 103 also requests AP 1 101 to transmit the trigger frame 620 on the first link 301, STA 1 105 and STA 2 107 may perform uplink transmissions based on the trigger frames 620 and 640 from AP 1 101 and AP 2 103. The STA MLD may have the first link 301 and the second link 303 as an NSTR link pair. When the first link 310 and the second link 303 of the STA MLD are the NSTR pair, the transmission start times and/or transmission end times of the trigger frames 620 and 640 may be synchronized on the first link 301 and the second link 303 of the AP MLD. The transmission start times and/or transmission end times of the trigger frames 620 and 640 may differ by a predetermined duration. According to an embodiment, channel access procedures for transmitting the trigger frames 620 and 640 are performed by AP 1 101 and AP 2 103 on the first link 301 and the second link 303 respectively. The channel access procedure may be an EDCA backoff operation. When channel access procedures end or are successful simultaneously at AP 1 101 or AP 2 103, AP 1 101 and AP 2 103 may synchronize and transmit the trigger frames 620 and 640. The channel access procedures at AP 1 101 and AP 2 103 may have different end times. For example, the channel access procedure at AP 2 103 may end later than the channel access procedure at AP 1 101. The EDCA backoff counter of AP 1 101 may be maintained at zero, and AP 1 101 may wait without transmitting a frame until the EDCA backoff counter of AP 2 103 reaches zero. When the channel access procedure of AP 2 103 ends, AP 1 101 and AP 2 103 may synchronize and transmit trigger frames 620 and 640. In another method, when the channel access procedure of AP 1 101 ends earlier, AP 1 101 may the trigger frame 620 earlier. When the channel access procedure of AP 2 103 ends, AP 2 103 may transmit the trigger frame 640. To synchronize the end times for the trigger frame 620 transmitted by AP 1 101 and the trigger frame 640 transmitted by AP 2 103, a padding may be added before and/or at the end of the frame 620 transmitted by AP 1 101. A frame check sequence (FCS) field may be added before the padding added to the trigger frame. For example, the padding includes a padding field and a padding bit. Through the padding, the end times of the trigger frames 620 and 640 transmitted by AP 1 101 and AP 2 103 are synchronized.

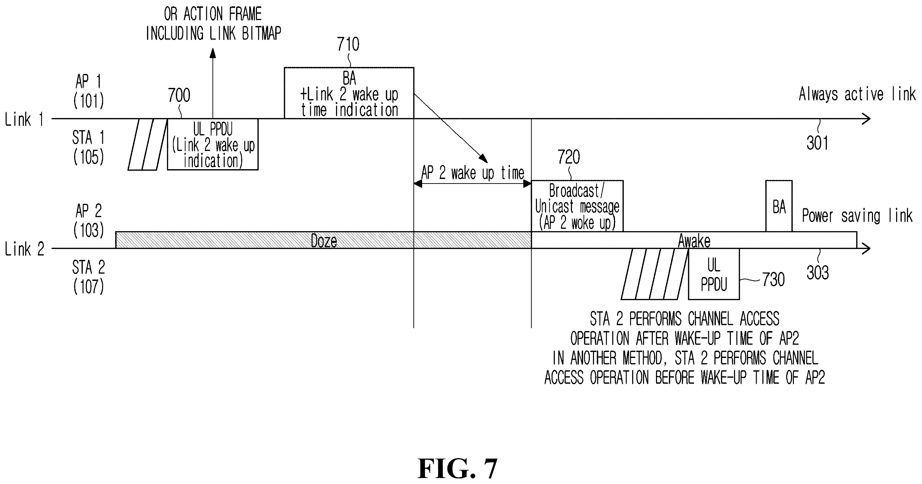

FIG. 7 illustrates a sixth embodiment of a communication method during an AP power saving operation in a WLAN system.

Referring to FIG. 7, an AP MLD and an STA MLD may operate on a first link 301 and a second link 303. An AP of the AP MLD operating on the first link 301 is AP 1 101, and an AP of the AP MLD operating on the second link 303 is AP 2 103. An STA of the STA MLD operating on the first link 301 is STA 1 105, and an STA of the STA MLD operating on the second link 303 is STA 2 107. The AP MLD may use an unscheduled power saving operation. For example, the AP MLD may not perform a power saving operation on the first link 301 but perform the power saving operation on the second link 303. When the AP MLD operates the power saving operation on the second link 303, AP2 103 may operate in doze and awake states. The doze state may be a state in which power consumption is low, and an AP operating in the doze state is incapable of channel sensing and data transmission/reception. On the other hand, depending on the capability of an AP, data transmission/reception is impossible while channel sensing may be possible or limited reception of a frame or a signal may be possible in the doze state. For example, in the doze state, at least one of a specific frame with a predetermined format (e.g., an initial control frame) or a physical layer preamble may be received. The awake state may be a state in which power consumption is present, and an AP is capable of channel sensing and data transmission/reception. AP 2 103 operating on the second link 303 may operate in the awake state or operate in the doze state according to a data transmission/reception situation of STA 1 105 and/or AP 1 101 on the first link 301 and a use request for the second link 303. For example, when the AP MLD intends to transmit a downlink PPDU using both the first link 301 and the second link 303, AP 2 103 on the second link 303 may operate in the awake state. Alternatively, when the STA MLD requests the use of the second link 303 through a request transmitted on the link 301, that is, when the STA MLD requests the use of the second link 303 to transmit data to the AP MLD using the second link 303, AP 2 103 on the second link 303 may operate in the awake state. When the use of the second link 303 is not required, AP 2 103 on the second link 303 may operate in the doze state. When the AP MLD does not perform the power saving operation on the first link 301 but operate in the doze state on the second link 303, the operating frequency bandwidth of the AP MLD may become narrower. When the AP MLD does not perform the power saving operation on the first link 301 but operate in the awake state on the second link 303, the operating frequency bandwidth of the AP MLD may become wider. That is, the operation capability of the AP MLD may vary depending on the power saving operation state of the first link 301 and/or the second link 303. A narrow operating frequency bandwidth indicates a narrow bandwidth of a data frame available for transmission and reception. A wide operating frequency bandwidth indicates a wide bandwidth of the data frame available for transmission and reception.

On the first link 301 and the second link 303, the STA MLD may intend to transmit an uplink frame 700. For example, the uplink frame 700 may include a PPDU, an MPDU, and an A-MPDU. STA 1 105 may perform a channel access operation on the first link 301. For example, the channel access operation may be an EDCA backoff operation. When STA 1 105 successfully performs the channel access operation on the first link 301, STA 1 105 may transmit the uplink frame 700 to AP 1 101. The uplink frame 700 may be a QoS Null frame, a data frame, or an action frame. The uplink frame 700 may include information requesting use of the second link 303 to transmit a data frame to AP 2 103 using the second link 303. AP 1 101 may use a response frame 710 to respond to STA 1 105. For example, the response frame 710 may include an ACK frame and a BlockAck frame. The response frame 710 of AP 1 101 may include time information indicating an available time for AP 2 103 that operates on the second link 303. The time information indicating the available time is time information including a time period during which AP 2 103 is transitioned into the awake state. That is, it is time information larger than the power transition delay of AP 2 103. The time information may be time information indicated by a timing synchronization function (TSF) timer or may be information in TUs. The TSF timer is time information indicated an AP within BSS. 1TU is 1024us. AP 2 103 may operate in the awake state at a time at which AP 2 103 is available. AP 2 103 operating in the awake state may transmit a broadcast frame 720 to STAs operating on the second link 303, thereby indicating that AP 2 103 is available. For example, the STAs operating on the second link 303 may include STA 2 107. The frame 720 indicating the availability of AP 2 103 may be referred to as a broadcast message. The broadcast message may be various forms of message including a beacon frame, a probe response frame, and a CF-End frame. In another method, AP 2 103 operating in the awake state may transmit a unicast frame to STA 2 107, thereby indicating that AP 2 103 is available. The broadcast frame 720 or the unicast frame may be sent after channel access is successful. A channel access procedure for channel access may be performed upon operation in the awake state or after a predetermined time period following the operation in the awake state. The predetermined time period may be NAVSyncDelay or MediumSyncDelay. The predetermined time period may be a time taken for wireless medium synchronization. A duration including the predetermined time period may be time information indicating a time at which the AP 2 103 is available. To indicate that AP 2 103 is available, both the broadcast frame 720 and the unicast frame may be transmitted. STA 2 107 may receive the broadcast frame 720 and/or the unicast frame of an AP and transmit an uplink frame 730 to AP 2 103 through the channel access procedure.

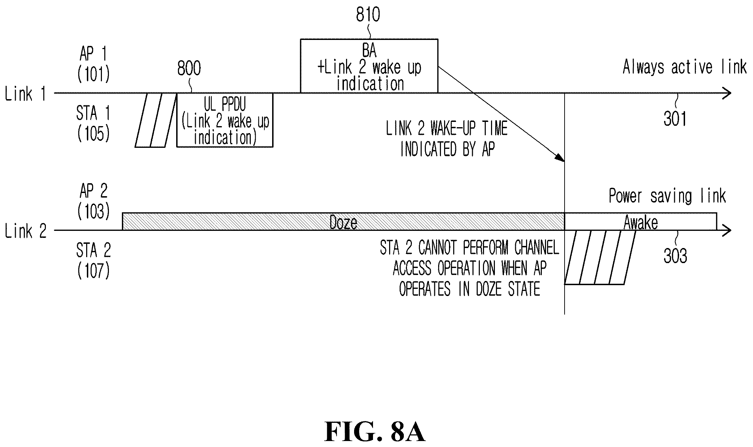

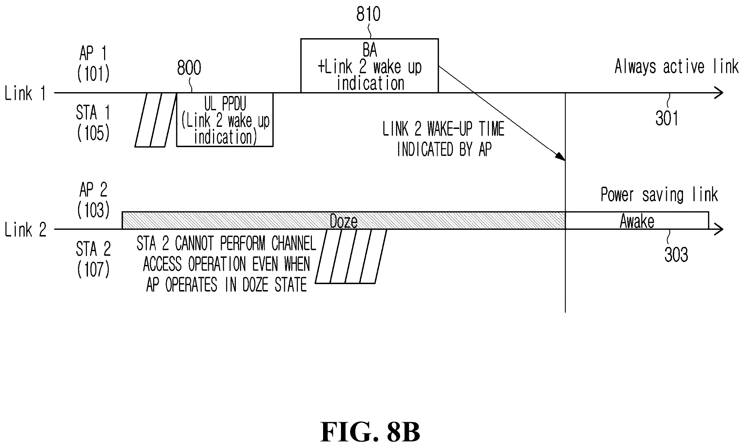

FIG. 8A illustrates a seventh embodiment of a communication method during an AP power saving operation in a WLAN system. FIG. 8B illustrates an eighth embodiment of a communication method during an AP power saving operation in a WLAN system

Referring to FIG. 8A and FIG. 8B, an AP MLD and an STA MLD may operate on the first link 301 and the second link 303. An AP of the AP MLD operating on the first link 301 is AP 1 101, and an AP of the AP MLD operating on the second link 303 is AP 2 103. An STA of the STA MLD operating on the first link 301 is STA 1 105, and an STA of the STA MLD operating on the second link 303 is STA 2 107. The AP MLD may use an unscheduled power saving operation. For example, the AP MLD may not perform a power saving operation on the first link 301 but perform the power saving operation on the second link 303. When the AP MLD operates the power saving operation on the second link 303, AP2 103 may operate in doze and awake states. The doze state may be a state in which power consumption is low. An AP operating in the doze state is incapable of channel sensing and data transmission/reception. On the other hand, depending on the capability of an AP, data transmission/reception is impossible while channel sensing may be possible or limited reception of a frame or a signal may be possible in the doze state. For example, in the doze state, at least one of a specific frame with a predetermined format (e.g., an initial control frame) or a physical layer preamble may be received. The awake state may be a state in which power consumption is present. An AP in the awake state is capable of channel sensing and data transmission/reception. AP 2 103 operating on the second link 303 may operate in the awake state or operate in the doze state according to a data transmission/reception situation of STA 1 105 and/or AP 1 101 on the first link 301 and a use request for the second link 303. For example, when the AP MLD intends to transmit a downlink PPDU using both the first link 301 and the second link 303, AP 2 103 on the second link 303 may operate in the awake state. Alternatively, when the STA MLD requests the use of the second link 303 through a request transmitted on the link 301, that is, when the STA MLD requests the use of the second link 303 to transmit data to the AP MLD using the second link 303, AP 2 103 on the second link 303 may operate in the awake state. When the use of the second link 303 is not required, AP 2 103 on the second link 303 may operate in the doze state. When the AP MLD does not perform the power saving operation on the first link 301 but operate in the doze state on the second link 303, the operating frequency bandwidth of the AP MLD may become narrower. When the AP MLD does not perform the power saving operation on the first link 301 but operate in the awake state on the second link 303, the operating frequency bandwidth of the AP MLD may become wider. That is, the operation capability of the AP MLD may vary depending on the power saving operation state of the first link 301 and/or the second link 303. A narrow operating frequency bandwidth indicates a narrow bandwidth of a data frame available for transmission and reception. A wide operating frequency bandwidth indicates a wide bandwidth of the data frame available for transmission and reception.

Referring to FIG. 8A, the STA MLD may determine that AP 2 103 of the AP MLD operates in the doze state. When the STA MLD intends to transmit an uplink frame to AP 2 103, STA 2 107 of the STA MLD may perform a channel access operation after receiving an indication from STA 1 105 on the first link 301 that AP 2 103 on the second link 303 operates in the awake state. For example, the channel access operation may include an EDCA backoff operation. When STA 2 107 completes the channel access operation, STA 2 107 may transmit an uplink frame 800 to AP 2 103.

Referring to FIG. 8B, the STA MLD may determine that AP 2 103 of the AP MLD operates in the doze state. When the STA MLD intends to transmit the uplink frame 800 to AP 2 103, STA 2 107 of the STA MLD may perform a channel access operation even before receiving an indication from STA 1 105 on the first link 301 that AP 2 103 on the second link 303 operates in the awake state. For example, the channel access operation may include an EDCA backoff operation. When the channel access of STA 2 107 is completed but AP2 103 operates in the doze state, STA 2 107 may wait while maintaining the backoff counter at zero. On the other hand, STA 2 107 may repeat the channel access procedure until AP 2 103 operates in the awake state. When the channel access of STA 2 107 is completed and AP2 103 operates in the awake state, STA 2 107 may transmit an uplink frame to AP 2 103.

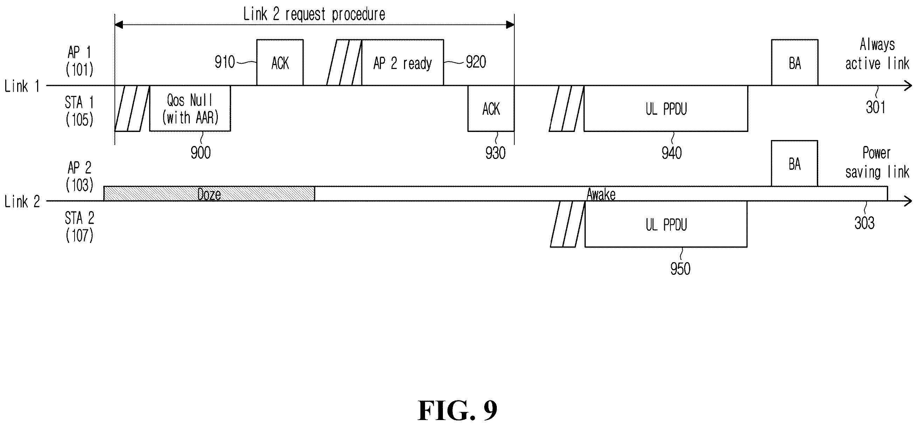

FIG. 9 illustrates a ninth embodiment of a communication method during an AP power saving operation in a WLAN system

Referring to FIG. 9, an AP MLD and an STA MLD may operate on the first link 301 and the second link 303. An AP of the AP MLD operating on the first link 301 is AP 1 101, and an AP of the AP MLD operating on the second link 303 is AP 2 103. An STA of the STA MLD operating on the first link 301 is STA 1 105, and an STA of the STA MLD operating on the second link 303 is STA 2 107. The AP MLD may use an unscheduled power saving operation. For example, the AP MLD may not perform a power saving operation on the first link 301 but perform the power saving operation on the second link 303. When the AP MLD operates the power saving operation on the second link 303, AP2 103 may operate in doze and awake states. The doze state may be a state in which power consumption is low. An AP operating in the doze state is incapable of channel sensing and data transmission/reception. On the other hand, depending on the capability of an AP, data transmission/reception is impossible while channel sensing may be possible or limited reception of a frame or a signal may be possible in the doze state. For example, in the doze state, at least one of a specific frame with a predetermined format (e.g., an initial control frame) or a physical layer preamble may be received. The awake state may be a state in which power consumption is present. An AP in the awake state is capable of channel sensing and data transmission/reception. AP 2 103 operating on the second link 303 may operate in the awake state or operate in the doze state according to a data transmission/reception situation of STA 1 105 and/or AP 1 101 on the first link 301 and a use request for the second link 303. For example, when the AP MLD intends to transmit a downlink PPDU using both the first link 301 and the second link 303, AP 2 103 on the second link 303 may operate in the awake state. Alternatively, when the STA MLD requests the use of the second link 303 through a request transmitted on the link 301, that is, when the STA MLD requests the use of the second link 303 to transmit data to the AP MLD using the second link 303, AP 2 103 on the second link 303 may operate in the awake state. When the use of the second link 303 is not required, AP 2 103 on the second link 303 may operate in the doze state. When the AP MLD does not perform the power saving operation on the first link 301 but operate in the doze state on the second link 303, the operating frequency bandwidth of the AP MLD may become narrower. When the AP MLD does not perform the power saving operation on the first link 301 but operate in the awake state on the second link 303, the operating frequency bandwidth of the AP MLD may become wider. That is, the operation capability of the AP MLD may vary depending on the power saving operation state of the first link 301 and/or the second link 303. A narrow operating frequency bandwidth indicates a narrow bandwidth of a data frame available for transmission and reception. A wide operating frequency bandwidth indicates a wide bandwidth of the data frame available for transmission and reception.

A frame exchange for requesting use of the second link 303 by the STA MLD may be performed on the first link 301. For example, STA 1 105 transmits a frame 900 requesting use of AP 2 103 to AP 1 101. The frame 900 requesting use of AP 2 103 may be various frames such as an action frame and a QoS data and Null frame including an MAC header. The frame 900 requesting use of AP 2 103 may include an indicator requesting use of AP 2 103. The indicator requesting use of AP 2 103 may be in various forms including an A-Control control field, a subfield, a field, an indication bit, and an information element. The indicator requesting use of AP 2 103 may include at least one of the bitmap of a link on which AP 2 103 operates, a link ID, all or part of MAC address and BSSID of AP 2 103, or other information available for identifying AP 2 103. The indicator requesting use of AP 2 103 is an indicator requesting AP 2 103 to be in a state capable of communication. AP 1 101 may receive the frame requesting use of AP 2 103. AP 1 101 may use a response frame (e.g., an ACK frame or a BlockAck frame) to respond to the frame requesting use of AP 2 103 from STA 1 105. After AP 1 101 transmits the response frame 910, AP 1 101 may transmit a preparation frame 920 for AP 2 103 to STA 1 105.

The preparation frame 920 for AP 2 103 may be various frames such as an action frame and a QoS data and Null frame including an MAC header. The preparation frame 920 for AP 2 103 may include an indicator indicating that AP 2 103 is prepared. The indicator indicating that AP 2 103 is prepared may be in various forms including an A-Control control field, a subfield, a field, an indication bit, and an information element. The indicator indicating that AP 2 103 is prepared may include at least one of the bitmap of a link on which AP 2 103 operates, a link ID, all or part of MAC address and BSSID of AP 2 103, or other information available for identifying AP 2 103. The indicator indicating that AP 2 103 is prepared is an indicator indicating that AP 2 103 is capable of communication.

The preparation frame 920 for AP 2 103 may be transmitted after AP 1 101 receives the frame requesting AP 2 103 and after a point in time when AP 2 103 is available (e.g., after a power transition delay, which is the time required to transition AP 2 103 into an available state from the time of receiving the preparation frame for AP 2 103).

When AP 1 101 receives the frame requesting AP 2 103 from STA 1 105, AP 1 101 may immediately transmit the preparation frame for AP 2 103 to STA 1 105 instead of transmitting the response frame.

Hereinafter, embodiments of a procedure for an AP and an STA to perform communication using a power saving link will be described. The AP and the STA may be MLDs that operate on a plurality of links. Hereinafter, a link on which a connected AP is in the awake state may be referred to as an awake state link or a communication-capable link. A link on which an AP is in the doze state may be referred to as a doze state link or a communication-incapable link. At least one of a plurality of links may be an active link, and the remaining links may be power saving links. Here, the active link may be a link that is always in the awake state. The power saving link is a link that normally maintains the doze state and is transition into the awake state only when data transmission and reception are needed. The power saving link may be transitioned into the awake state by information that is transmitted using the active link. Herein, embodiments of transitioning the power saving link into the awake state using the active link will be described.

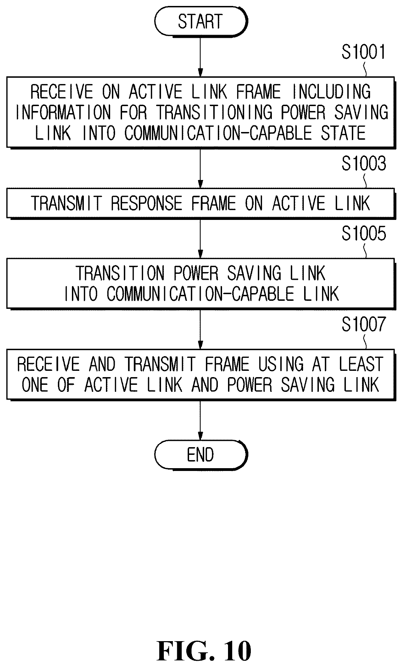

FIG. 10 illustrates a flowchart in which an AP according to an embodiment of the present disclosure performs communication using a power saving link. FIG. 10 illustrates an example of a procedure performed by an AP (e.g., AP 1 101 and AP 2 103 of FIG. 3). The AP may include an AP MLD that performs communication using a plurality of links. For example, the AP MLD may perform communication using an active link (e.g., the first link 301 of FIG. 3) and a power saving link (e.g., the second link 303 of FIG. 3).

Referring to FIG. 10, in step S1001, the AP receives, on an active link, a frame (e.g., the uplink frame 300 of FIG. 3) including information for transitioning a power saving link into a communication-capable state. Hereinafter, a frame including information for transitioning a power saving link into a communication-capable state may be referred to as an initial frame. The initial frame may include at least one of a PPDU, an MPDU, an A-MPDU, a QoS Null frame, an action frame, or a QoS data frame. The information for transitioning a power saving link to a communication-capable state may include at least one of a power saving link use indicator (e.g., information requesting use of the second link in FIG. 3) and information for transmitting a trigger frame. The power saving link use indicator is transmitted to change the state of a link, and specifically, instructs transitioning a link in the doze state into the awake state. In other words, the power saving link use indicator instructs transitioning the state to enable communication on the power saving link. To this end, the power saving link use indicator includes information for link identification. For example, the information for link identification may include at least one of a link bitmap, a link identifier, a MAC address of an AP on the power saving link, at least a portion of a BSSID, or information for identifying the AP on the power saving link. The information for link identification may have various forms and may be included in the initial frame. For example, the information for link identification may be expressed in the form of one of an A-Control, an AAR, a subfield, a field, an indication bit, or an information element of a MAC header. As another example, the information for link identification may have a form of action frame or information element included in the action frame.

In step S1003, the AP transmits a response frame (e.g., the response frame 310 of FIG. 3) on the active link. Here, the response frame refers to a frame that is transmitted as a response to the initial frame received on the active link. For example, the response frame may include at least one of a BA frame, a QoS Null frame, or an ACK frame. The response frame may include information associated with use of a power saving link. Information associated with use of a power saving link may include at least one of availability of the power saving link, information for medium synchronization of the power saving link, or information regarding a timing of a power saving link operation. The information for medium synchronization of the power saving link may include Sync Request information. The information regarding a timing of a power saving link operation may include information indicating a time at which the AP can perform communication on the power saving link. For example, the information associated with use of the power saving link may be expressed in the form of one of an A-Control, an AAR, a subfield, a field, an indication bit, or an information element of a MAC header. The information regarding a timing of a power saving link operation may be indicated by a TSF timer or in TUs.

In step S1005, the AP transitions the power saving link to the communication-capable state. In other words, the state of the AP that performs communication using the power saving link may be transitioned into the awake state. For example, the AP may transition the power saving link to the communication-capable state after a predetermined time period has elapsed since receiving the initial frame or the response frame. As another example, the AP may transition the power saving link to the communication-capable state after the predetermined time period has elapsed since beginning to decode the initial frame or the response frame. Here, the predetermined time period may be a time period for transitioning the state of the AP. On the other hand, the predetermined time period may be a time period longer or shorter than the time period for transitioning the state of the AP. As still another example, the AP may transition the power saving link to the communication-capable state at a time indicated by the information associated with use of the power saving link included in the response frame.

In step S1007, the AP transmits or receives a frame using at least one of the active link or the power saving link. In other words, the AP may receive an uplink frame or transmit a downlink frame using at least one of the active link or the power saving link. For example, the uplink frame may include at least one of a data frame (e.g., the uplink frame 320 of FIG. 3) and a CTS frame (e.g., the CTS frame 630 of FIG. 6A). For example, the downlink frame may include at least one of a trigger frame (e.g., the trigger frame 420 of FIG. 4), a broadcast frame (e.g., the broadcast frame 720 of FIG. 7), a unicast frame, or a BA frame. Here, the broadcast frame may be transmitted using a power saving link. The broad frame may include at least one of a BA frame, a QoS Null frame, or an CF frame. The AP may perform a channel access procedure on the power saving link before transmitting and receiving a frame. The channel access procedure may be performed when the AP is in the doze state. On the other hand, the channel access procedure may be performed when the AP is in the awake state. For example, the channel access procedure may include an EDCA backoff operation.

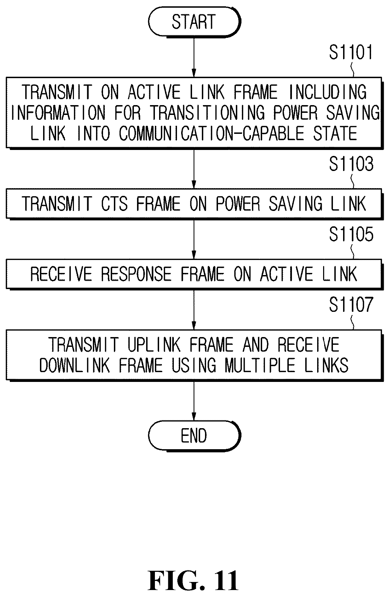

FIG. 11 illustrates a flowchart in which an STA according to an embodiment of the present disclosure performs communication using a power saving link. FIG. 11 illustrates an example of a procedure performed by an STA (e.g., STA 1 105 and STA 2 107 of FIG. 3). The STA may include an STA MLD that performs communication using a plurality of links. For example, the AP MLD may perform communication using an active link (e.g., the first link 301 of FIG. 3) and a power saving link (e.g., the second link 303 of FIG. 3).

Referring to FIG. 11, in step S1101, the STA transmits a frame (e.g., the uplink frame 300 of FIG. 3) including information for transitioning a power saving link into a communication-capable state. Hereinafter, a frame including information for transitioning a power saving link into a communication-capable state may be referred to as an initial frame. The initial frame may include at least one of a PPDU, an MPDU, an A-MPDU, a QoS Null frame, an action frame, or a QoS data frame. The information for transitioning a power saving link to a communication-capable state may include at least one of a power saving link use indicator (e.g., information requesting use of the second link in FIG. 3) and information for transmitting a trigger frame. The power saving link use indicator is transmitted to change the state of a link. Specifically, the power saving link use indicator instructs transitioning a link in the doze state into the awake state. In other words, the power saving link use indicator instructs transitioning the state to enable communication on the power saving link. To this end, the power saving link use indicator includes information for link identification. For example, information for link identification may include at least one of a link bitmap or a link identifier. The information for link identification may have various forms and may be included in a frame including information for transitioning a power saving link into a communication-capable state. For example, the information for link identification may be expressed in the form of one of an A-Control, an AAR, a subfield, a field, an indication bit, or an information element of a MAC header. As another example, the information for link identification may be expressed in the form of action frame or information element included in the action frame. The STA may perform a channel access procedure on an active link before transmitting an initial frame.

In step S1103, the STA transmits a CTS frame (e.g., the CTS frame 520 of FIG. 5A) on the power saving link. Here, the power saving link may be in the doze link. In other words, an AP on the power saving link may be in the doze state. That is, the AP on the power saving link may be in a communication-incapable state. The CTS frame may include a frame for configuring NAV at an STA different from the STA on the power saving link. Here, a receiver of the CTS frame may be the STA on the power saving link. That is, the CTS frame may include a CTS-to-Self frame. The STA may perform a channel access procedure on the power saving link before transmitting the CTS frame. The STA may configure NAV based on the CTS frame. For example, the STA may configure NAV on the remaining links other than the active link and a link indicated by the power saving link indicator based on the CTS frame.

In step S1105, the STA receives a response frame (e.g., the response frame 310 of FIG. 3) on the active link. Here, the response frame refers to a frame that is received as a response to the initial frame transmitted on the active link. For example, the response frame may include at least one of a BA frame, a QoS Null frame, or an ACK frame. The response frame may include information associated with use of a power saving link. Information associated with use of a power saving link may include at least one of availability of the power saving link, information for medium synchronization of the power saving link, or information regarding a timing of a power saving link operation. The information for medium synchronization of the power saving link may include Sync Request information. The information regarding a timing of a power saving link operation may include information indicating a time at which the STA can perform communication using the power saving link. For example, the information associated with use of the power saving link may be expressed in the form of one of an A-Control, an AAR, a subfield, a field, an indication bit, or an information element of a MAC header. The information regarding a timing of a power saving link operation may be indicated by a TSF timer or in TUs.

In step S1107, the STA transmits or receives a frame using at least one of the active link or the power saving link. In other words, the STA may transmit an uplink frame or receive a downlink frame using at least one of the active link or the power saving link. For example, the uplink frame may include at least one of a data frame (e.g., the uplink frame 320 of FIG. 3) and a CTS frame (e.g., the CTS frame 630 of FIG. 6A). Here, the CTS frame may be transmitted in response to the response frame. For example, the downlink frame may include at least one of a trigger frame (e.g., the trigger frame 420 of FIG. 4), a broadcast frame (e.g., the broadcast frame 720 of FIG. 7), a unicast frame, or a BA frame. Here, the downlink frame may be received using the active link and a power saving link. The broad frame may include at least one of a BA frame, a QoS Null frame, or an CF frame. The STA may perform a channel access procedure on the power saving link before transmitting or receiving a frame. The channel access procedure may be performed depending on a state of the AP. For example, it may be performed when the AP is in the doze state, and it may be performed when the AP is in the awake state. For example, the channel access procedure may include an EDCA backoff operation. The STA waits by maintaining a counter at zero after performing the channel access procedure and may transmit an uplink frame when the AP is transitioned into the awake state.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

In addition, the computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

While the present disclosure has been described above with reference to preferred embodiments of the present disclosure, those skilled in the art will understand that various modifications and variations may be made to the present disclosure without departing from the scope and spirit of the present disclosure, which are defined by the Claims appended hereto.

## Claims

1. A method for operating an access point (AP) in a wireless local area network (WLAN) system, the method comprising:
receiving a frame including information for transitioning a power saving link into a communication-capable state by using an active link;
transmitting a response frame by using the active link;
transitioning the power saving link into the communication-capable state; and
performing at least one of reception of an uplink frame or transmission of a downlink frame by using at least one of the active link or the power saving link.

2. The method of claim 1, wherein the information for transitioning the power saving link into the communication-capable state includes at least one of information for identifying the power saving link or information requesting a trigger frame.

3. The method of claim 2, wherein the downlink frame includes a trigger frame that is transmitted based on the information requesting the trigger frame.

4. The method of claim 1, wherein the response frame includes at least one of availability of the power saving link, information for medium synchronization of the power saving link, or information regarding a timing of a power saving link operation.

5. The method of claim 4, wherein the power saving link is transitioned into the communication-capable state based on the information regarding the timing of the power saving link operation.

6. The method of claim 1, wherein the response frame is transmitted by using at least one of the active link or the power saving link.

7. The method of claim 1, further comprising transmitting a frame including information indicating that transmission or reception of a frame is possible on the power saving link by using the power saving link.

8. The method of claim 1, wherein the power saving link is transitioned into the communication-capable state when a predefined time period has elapsed after a time at which one of a frame including the information for transitioning the power saving link into the communication-capable state or the response frame is completely received.

9. The method of claim 1, wherein the power saving link is transitioned into the communication-capable state when a predefined time period has elapsed after a time at which one of a frame including the information for transitioning the power saving link into the communication-capable state or the response frame starts being decoded.

10. The method of claim 1, further comprising transmitting a frame including information notifying that the power saving link is in the communication-capable state.

11. A method for operating a station (STA) in a wireless local area network (WLAN) system, the method comprising:
transmitting a frame including information for transitioning a power saving link into a communication-capable state by using an active link;
receiving a response frame by using the active link;
performing a channel access procedure on the power saving link; and
performing at least one of reception of an uplink frame or transmission of a downlink frame by using the active link and the power saving link.

12. The method of claim 11, wherein the channel access procedure is performed when the power saving link is in a communication-incapable state.

13. The method of claim 12, wherein a CTS frame is transmitted on the power saving link to a receiver that is the STA after the channel access procedure ends.

14. The method of claim 14, further comprising configuring NAV on a link other than the active link and the power saving link based on the CTS frame.

15. The method of claim 11, wherein the response frame includes at least one of availability of the power saving link, information for medium synchronization of the power saving link, or information regarding a timing of a power saving link operation.

16. The method of claim 15, further comprising transmitting a frame for medium synchronization of the power saving link in response to the response frame.

17. An access point (AP) in a wireless local area network (WLAN) system, the AP comprising:
a transceiver; and
a processor coupled to the transceiver,
wherein the processor is configured to:
receive a frame including information for transitioning a power saving link into a communication-capable state by using an active link;
transmit a response frame by using the active link;
transition the power saving link into the communication-capable state; and
perform at least one of reception of an uplink frame or transmission of a downlink frame by using the active link and the power saving link.

18. A station (STA) in a wireless local area network (WLAN) system, the STA comprising:
a transceiver; and
a processor coupled to the transceiver,
wherein the processor is configured to:
transmit a frame including information for transitioning a power saving link into a communication-capable state by using an active link;
receive a response frame by using the active link;
perform a channel access procedure on the power saving link; and
perform at least one of reception of an uplink frame or transmission of a downlink frame by using the active link and the power saving link.

19. A non-transitory computer-readable medium storing at least one instruction, the non-transitory computer-readable medium comprising the at least one instruction that is executable by a processor,
wherein the at least one instruction instructs a device to:
receive a frame including information for transitioning a power saving link into a communication-capable state by using an active link;
transmit a response frame by using the active link;
transition the power saving link into the communication-capable state; and
perform at least one of reception of an uplink frame or transmission of a downlink frame by using the active link and the power saving link.
